# EUROPEAN PATENT SPECIFICATION

(11) **EP 0 436 560 B1**
(45) Date of publication and mention of the grant of the patent: **27.03.1996**
(21) Application number: 89909215.9
(22) Date of filing: 03.08.1989
(51) Int. Cl.: G06F 3/023

(54) **METHOD OF DISPLAYING OR RECORDING CHANGES IN THE RELATIONSHIP BETWEEN OBJECTS IN A DATA PROCESSING SYSTEM**
VERFAHREN ZUR ANZEIGE ODER ZUM SPEICHERN VON BEZIEHUNGSÄNDERUNGEN ZWISCHEN OBJEKTEN IN EINEM DATENVERARBEITUNGSSYSTEM
METHODE D'AFFICHAGE ET D'ENREGISTREMENT DE CHANGEMENTS DE RELATIONS ENTRE OBJETS DANS UN SYSTEME DE TRAITEMENT DE DONNEES

(43) Date of publication of application: 17.07.1991
(73) Proprietor: International Business Machines Corporation, Armonk, N.Y. 10504 (US)
(72) Inventor: WILES, John, Stewart, Winchester Hants SO23 9RJ (GB)
(74) Representative: Bailey, Geoffrey Alan
(86) International application number: GB8900884
(87) International publication number: WO9102304

(56) References cited:
- FR-A- 2 607 284
- GB-A- 2 114 784
- ACM Transactions on Graphics, Vol. 5, No. 4, October 1986, ACM, (US), A. BORNING et al.: "Constraint-Based Tools for Building user Interfaces", see pages 345-374

## Description

The present invention relates to data processing system. More particularly the invention relates to the user interface of data processing systems.

The use of data processing system in terms of the number of users, the numbers of systems and the numbers of functions the systems perform is growing rapidly. As this trend progresses the task of controlling these data processing systems becomes ever more complex. The problem of this additional complexity is further compounded by the fact that the people who are required to control these systems are no longer computer specialists with a detailed knowledge of the data processing systems.

US 4752889 discloses a knowledge system incorporating a graphic display which allows the user to automatically display and to modify the links between "chunks" of interdependent rules of knowledge, the modifications being displayed and stored in memory. Selection means enable the user to remove a link and its corresponding chunk(s) from the display, or create a new rule while recopying the present rule, and perform other similar operations.

This general problem is further illustrated by considering the problems involved in managing the access of users to application programs within a data processing network. Within a network of thousands of users and workstations with hundreds or thousands of possible applications it is desirable that the access to applications be managed on a decentralised basis. This requirement does however mean that the user interface for managing the system be as easy to use as possible so as to ease the task of the nonspecialist managers.

Viewed from one aspect the present invention provides a method of displaying or recording changes between objects in a data processing system, said method comprising the steps of:
displaying a plurality of groups of objects on a display device, each object having a corresponding visual representation, whereby said groups of objects belong to at least two different classes of object;
selecting, responsive to user input, two or more objects from at least two of said different object classes;
and displaying or recording, responsive to user input, a change in the relationship between the selected objects.

The present invention thus provides a user interface for registering changes in relationship between objects which is simple for the user to learn and work with whilst also being particularly well suited to implementation by a data processing system. Existing data processing systems already have the hardware and software structures to enable them to be readily adapted (e.g. by a software program) to display groups of object representations and allow a user to select objects from the groups (e.g. by keyboard or mouse manipulation of the cursor) in order to register a change in the relationship between the selected objects.

It will be appreciated that the display of the groups of object representations may take many forms. In one simple case the display may be in the form of a list of the names of the objects. Other possible forms include a list of icons, each icon representing an object, or a collection of icons or names not presented as a list but simply displayed within a given area. One way of viewing this feature of the invention is that the data processing system displays some visual representation of the objects, the exact form of the representation not being critical.

In preferred embodiments of the invention said groups of object representations are displayed in the form of lists of object names. Such a form of representation has been found to be particularly easy for users to learn and work with since many existing data processing systems are what is termed 'menu driven', i.e. the user's interaction with the system is made by a series of selections from different lists of options displayed to the user. Accordingly, many users are already familiar with interacting with lists.

A further preferred feature of the form of display of the object representations is that said groups of object representations are displayed adjacent one another. It has been found that such an arrangement simplifies the user interface compared with arrangements in which distracting information and the like is displayed between the groups of objects whose relationships are to be manipulated.

The change in relationship being registered using the invention can take any form. Example applications of the invention which illustrate the flexibility and general applicability of the invention are the control of personnel having access through secure doors, applications being assigned to run on particular host systems in a network, users being assigned a particular node in a communication system etc. In particularly preferred embodiments of the invention said relationship is access of a user to an application program. This relationship is particularly well suited to control using the invention due to the complexity of relationships possible and the large numbers of both users and application programs.

There are many possible ways in which the data processing system may register the change in relationship. In simple systems the change may be recorded in permanent or temporary storage either as an individual record or as a record associated with all the other records relating to that particular object. There are however other possibilities such as the registering of the change in relationship causing a display elsewhere to change or a physical connection to be made or broken. One way of viewing the registering of the change in relationship is that as a result of the selection of the objects by the user an act of some sort is carried out by the data processing system but the act carried out can have many forms.

In preferred embodiments of the present invention said display device also displays representations of different possible changes in relationship that can be registered in response to said selection, and manipulation of said user input device by said user selects between said different possible changes. It will be appreciated that in a simple system only one sort of relationship may be possible for given objects, making the above feature unnecessary. However, in systems such as the user and application program control described above more than one change in relationship is possible e.g. to allow or cancel access for a user to an application program.

The display of the possible changes in relationship can be present continuously whilst the groups of objects are displayed. However, in preferred embodiments of the invention said display of representations of different changes in relationship appears after said object representations have been selected. This preferred feature both saves space on the display and prompts the user into the procedure that should be followed.

Another preferred feature of the present invention is that groups of objects within a class of objects have a hierarchical arrangement, each object in one displayed group including a plurality of objects from a lower level in the hierarchy. The structure produced by this feature is analogous to the root directly, branch directory, leaf directory structure used in, for example, data base systems. Another analogy is that of a hierarchical set structure having sets, subsets, subsets etc.

This preferred feature is illustrated by considering the possibilities for groups of object representations for users. At the base level would be a group of object representations comprising the names of each individual user. The next step up the hierarchy could be a collective group comprising the departments the users worked for e.g. administration, marketing, product, research etc. At a higher level still it would be possible to have a collective group whose elements are the different subsidiary companies each having its own set of departments. Another example would be that for applications. At the base level a group comprising a list of applications could be followed by a collective group comprising a list of different suites of applications.

It will be appreciated that this structure is highly flexible and a given object representation may correspond to more than one object representation in a collective group e.g. a given user could be a member of both marketing and production.

The advantage of this preferred feature is that a large number of changes in relationship can be registered in a single simple and easy to visualise operation, e.g. if it is desired to make a particular application available to every member of a department then instead of having to register this change separately for each member of the department the change can be made in a single operation by selecting the appropriate department from a list of departments and connecting that department to the appropriate application.

A further preferred feature of the invention is that the visual representation of higher level objects are displayed more centrally than those of the corresponding lower level objects. This feature provides a simple and intuitively understandable user interface in which the most basic level object representations such as individual users are at the edges of the display whilst the higher level collective groups such as departments of users are in the centre of the display. This manner of display is also inherently extendable and it will be apparent that many layers of hierarchy may be simultaneously displayed and manipulated by a user.

A problem which arises with this hierarchical display feature is that for reasons of limited space on the display and a need to see which object representations correspond to a particular object representation in a collective group it may not be desirable to display all the objects in a given group at any one time. Accordingly, in preferred embodiments of the invention, in response to a user action such as double clicking a mouse in relation to a first object, the objects in the level below said first object are displayed. Once again this feature simplifies the use of the system and enables the appropriate objects from what might be a list of thousands of objects to be displayed.

Viewed from another aspect the present invention provides a data processing system adapted to display simultaneously at least two groups of objects and to register a change in relatinship between objects selected from different groups by a user.

An embodiment of the invention will now be described, by way of example only, with reference to the accompanying drawings in which:
Figure 1 schematically illustrates the display produced by an embodiment of the invention.
Figure 2 Schematically illustrates a portion of the display during a different phase of operation.
Figure 3 illustrates a flow diagram for the initialisation process of an embodiment of the invention.
Figures 4 and 5 are flow diagrams illustrating the processing of the selected objects and registering of the changes in relationship in an embodiment of the invention.

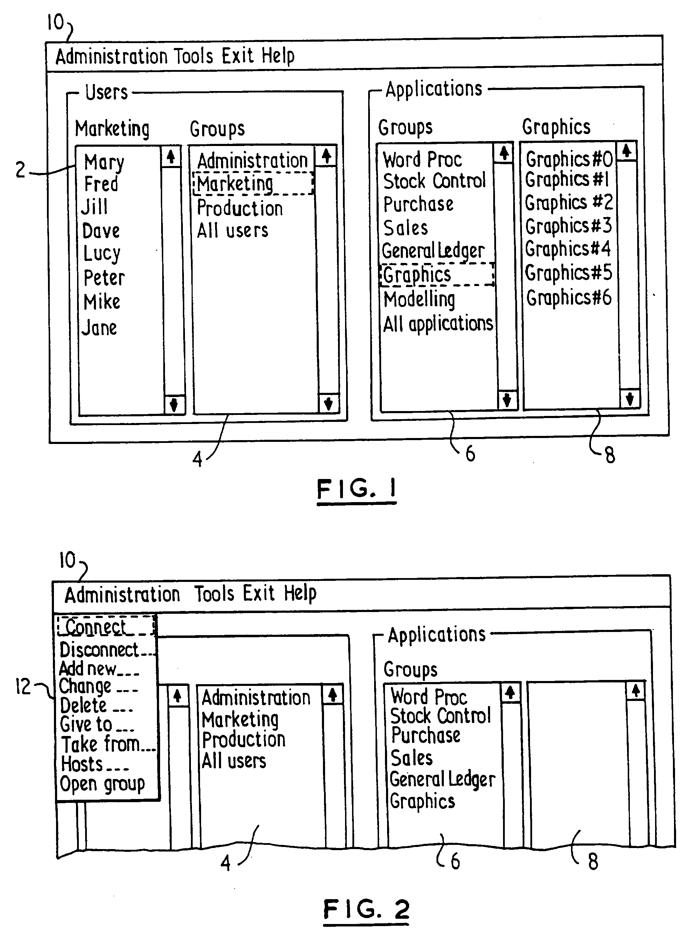

Figure 1 shows a display relating to two classes of objects, namely users and applications. The form of the display is a series of adjacent lists of object names. working from left to right, the first list is a list of user names 2. This list of user names 2 is a group of object representations. Next to the list of user names 2 is a group of collective object representations comprising a list of departments 4. The list of users 2 displayed comprises all the member of the marketing department. Thus, the collective object representation "Marketing" in the list of departments 4 corresponds to the set of users displayed in the list of users 2.

Moving to the next list to the right is a group of collective object representations comprising a list of application suite names 6. To the right 2 of this is a list of application names 8. It will be seen that the application suite "Graphics" corresponds to the set of applications Graphics #0 to Graphics #6.

The groups of collective object representations 4 and 6 are displayed medially relative to the lower level groups of object representations 2 and 8. Selection of a collective object such as "Graphics" triggers the set of objects corresponding to that collective object to be displayed in the appropriate adjacent lower level list.

Figure 2 illustrates a portion of the display showing how the type of change in relationship is selected. When the user has selected the objects whose relationships are to be changed he then moves the cursor onto the Administration pull down choice within the Action Bar 10 using a mouse. By pressing a button on mouse the user triggers the display of the pull down menu 12 of the possible changes in relationship. As can be seen, the pull down menu 12 lists options such as connect, disconnect, add new etc. The user then manipulates the mouse again to select the required change in relationship from the options presented and this selection then triggers the system to register the change in relationship in the manner previously described. The display then returns to the state shown in Figure 1.

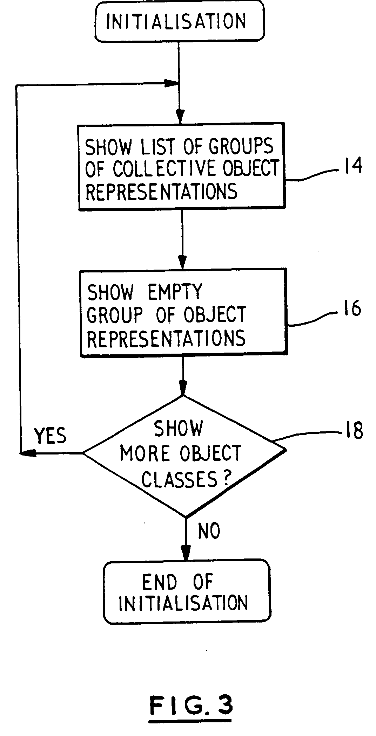

Figure 3 shows a flow diagram of the initialisation process for an embodiment of the invention. The system starts on the first class of objects (eg, users or applications) and displays the groups of collective object representations at step 14 (eg, displays the list of application suites 6). At step 16 the system displays an empty list of object representations (eg, display an empty box in which the list of individual applications 8 will be displayed). At step 18 the system determines whether more classes of object need to be displayed. If the answer is yes the process is repeated for the next class of object and if the answer is no then the initialisation process is terminated.

The mouse driver software used to manipulate the cursor is of standard type and a single "click" on the mouse is used to select an object and a "double click" on a collective object is used to trigger the system to display the set of objects associated with that collective object in the appropriate list.

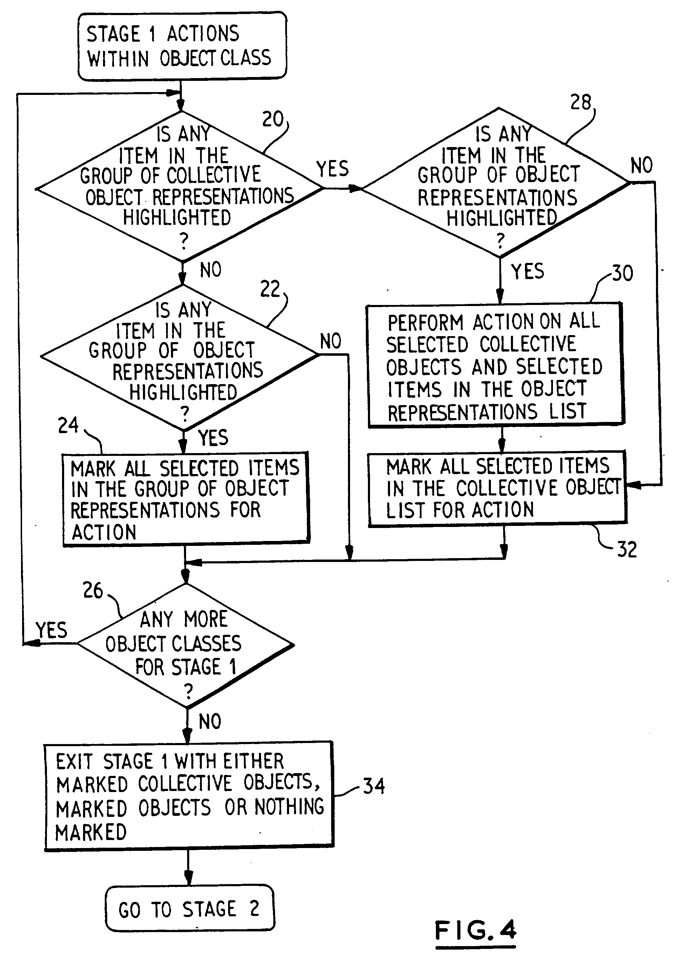

Once the objects and type of change of relationship have been selected by the user with the mouse and displays illustrated in figures 1 and 2, the system then the carries out the process illustrated in Figure 4 for each class of object.

The purpose of the process (stage 1) illustrated in Figure 4 is to determine the most appropriate objects between which the relationship should be changed when a mixture of collective objects and simple objects (eg, a user or application) have been selected within a given class of object and then mark those objects for further action.

The first step in the process is to determine if any collective objects have been highlighted (step 20). If no collective objects have been highlighted then the only possibility is that simple objects may have been highlighted and this is tested at step 22. If no objects at all have been highlighted then the process passes to step 26 to determine if any more classes of objects need processing. If at step 22 it was determined that some simple objects had been highlighted then these will be marked for future action (step 24) and the process will again pass to step 26.

If at step 20 it was determined that some collective objects had been selected then the process passes to step 28. At step 28 it is determined if simple objects have been selected in addition to the selected collective objects. If the answer is yes then the system performs the required change in relationship between the selected collective and simple objects at step 30 within the class. Step 30 ensures that changes in relationship between different classes rather than between simple low level objects of object take place wherever possible between collective objects from those classes as this is the most efficient way to keep lower the number to relationship to be registered.

If the answer at step 28 is no or after step 30 has been carried out the system progresses to step 32 where the selected collective objects are marked for future action. The system then progresses to step 26.

Step 26 ensures that all the different classes of object have been processed in the manner shown in Figure 4. When all the classes of object have been processed the system passes to step 34 which exits this marking stage. When the system exits the process of Figure 4 the most appropriate objects form those selected by the user will have been marked for further action and any changes in relationship within classes of object will already have been made.

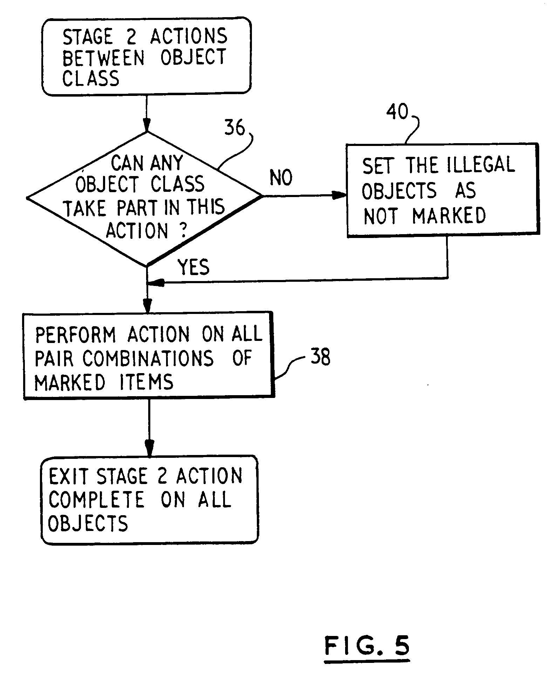

The system now progresses to the process shown in Figure 5 (stage 2). The purpose of stage 2 is to make the selected change in relationship between the objects marked in stage 1.

At step 36 the system determines if any class of object can take place in the change of relationship that has been selected. If the answer is no then at step 40 the objects marked for which the selected change in relationship is not allowed are reset so as to be not marked. At step 36, if the answer is yes or after step 40, the system passes to step 38 where the change in relationship selected is registered by the system for all marked objects. As noted previously, the registering of the change in relationship can take many possible forms, eg changes varying from merely slightly altering a table of stored relationships in a data base to triggering some large scale physical event.

Having described the appearance of an example of the user interface provided by the invention and flow diagrams showing the nature of the processing carried out it will be appreciated that the detailed coding of the software for implementing the embodiment could have many possible forms and be written in many different computer languages. It will however be apparent that once the appearance and function of the embodiment have been described then the detailed coding is a matter of routine. Information concerning programming windowing applications can be found in the IBM manual "OS/2 Version 1.1 Programming Guide" and the book "Programming the OS/2 Presentation Manager" by Charles Petzold (IBM, OS/2 and Presentation Manager are trademarks of International Business Machines Corporation).

## Claims

1. A method of displaying or recording changes between objects in a data processing system, said method comprising the steps of:
displaying (14) a plurality of groups of objects (2, 4, 6, 8) on a display device, each object having a corresponding visual representation, whereby said groups of objects belong to at least two different classes of object;
selecting, responsive to user input, two or more objects from at least two of said different object classes;
and displaying or recording, responsive to user input, a change in the relationship between the selected objects.

2. The method of claim 1, wherein the visual representation of a group of objects is in the form of a list of object names.

3. The method of claim 1, or 2, wherein a first class of objects represents application programs, and a second class of objects represents users, and said relationship controls access of a user to an application program.

4. The method of any preceding claim, further comprising the step of displaying a list of different possible changes in relationship, the user manipulating an input device to select between said different possible changes.

5. The method of any claim 4, wherein said step of displaying a list of different possible changes in relationship occurs after said step of selecting, responsive to user input, two or more objects from at least two of said different object classes.

6. The method of any preceding claim, wherein the groups of objects within a class of objects have a hierarchical arrangement, each object in one displayed group including a plurality of objects from a lower level in the hierarchy.

7. The method of claim 6, wherein the visual representations of higher level objects are displayed more centrally than those of the corresponding lower level objects.

8. The method of claim 6 or 7, further comprising the step of displaying, in response to a user action in relation to a first object, the objects in the level below said first object.

## Patentansprüche

1. Ein Verfahren zur Anzeige oder zum Speichern von Änderungen zwischen Objekten in einem Datenverarbeitungssystem, wobei dieses Verfahren Schritte enthält, um
eine Vielzahl von Gruppen mit Objekten (2, 4, 6, 8) auf einer Anzeigeeinheit anzuzeigen (14), wobei jedes Objekt eine entsprechende visuelle Darstellung hat und die Gruppen mit Objekten zu wenigstens zwei verschiedenen Kategorien von Objekten gehören;
zwei oder mehr Objekte aus wenigstens zwei der unterschiedlichen Kategorien als Reaktion auf die Benutzereingabe auszuwählen;
und um eine Beziehungsänderung zwischen den ausgewählten Objekten als Reaktion auf die Benutzereingabe anzuzeigen oder zu speichern.

2. Das Verfahren aus Anspruch 1, wobei die visuelle Darstellung von einer Gruppe mit Objekten in der Form einer Liste mit Objektnamen ist.

3. Das Verfahren aus Anspruch 1 oder 2, wobei eine erste Kategorie mit Objekten Anwendungsprogramme darstellt, und eine zweite Kategorie mit Objekten Benutzer darstellt, und diese Beziehung den Zugriff auf ein Anwendungsprogramm durch einen Benutzer kontrolliert.

4. Das Verfahren aus irgendeinem vorhergehenden Anspruch, das außerdem den Schritt enthält, eine Liste mit verschiedenen möglichen Beziehungsänderungen anzuzeigen, wobei der Benutzer eine Eingabegerät manipuliert, um zwischen den verschiedenen möglichen Änderungen auszuwählen.

5. Das Verfahren aus Anspruch 4, wobei der Schritt zum Anzeigen einer Liste mit verschiedenen, möglichen Beziehungsänderungen nach dem Schritt auftritt, zwei oder mehr Objekte aus wenigstens zwei der verschiedenen Objektkategorien als Reaktion auf die Benutzereingabe auszuwählen.

6. Das Verfahren aus irgendeinem vorhergehenden Anspruch, wobei die Gruppen mit Objekten innerhalb einer Kategorie mit Objekten eine hierarchische Anordnung haben und jedes Objekt in einer angezeigten Gruppe eine Vielzahl von Objekten aus einer unteren Ebene in der Hierarchie enthält.

7. Das Verfahren aus Anspruch 6, wobei die visuellen Darstellungen der Objekte aus den höheren Ebenen zentraler als diejenigen der entsprechenden Objekte aus den unteren Ebenen angezeigt werden.

8. Das Verfahren aus Anspruch 6 oder 7, das außerdem den Schritt enthält, um, als Reaktion auf einen Benutzereingriff in bezug auf das erste Objekt, die Objekte in der Ebene unter diesem ersten Objekt anzuzeigen.

## Revendications

1. Procédé pour afficher ou enregistrer des changements dans les relations entre des objets dans un système de traitement de l'information, ledit procédé comprenant les étapes consistant à :
afficher (14) une pluralité de groupes d'objets (2, 4, 6, 8) sur un visuel, à chaque objet correspondant une représentation visuelle associée, les dits groupes d'objets appartenant à au moins deux classes d'objets différentes ;
sélectionner, en réponse à une entrée par l'utilisateur, deux objets ou plus parmi au moins deux des dites classes d'objets différentes ;
et afficher ou enregistrer, en réponse à une entrée par l'utilisateur, une modification dans la relation entre les objets sélectionnés.

2. Procédé selon la revendication 1, dans lequel la représentation visuelle d'un groupe d'objets se fait sous la forme d'une liste de noms d'objets.

3. Procédé selon la revendication 1 ou 2, dans lequel une première classe d'objets représente des programmes d'application, et une deuxième classe d'objets représente des utilisateurs, et ladite relation contrôle l'accès à un programme d'application par un utilisateur.

4. Procédé selon l'une quelconque des revendications précédentes comprenant, de plus, l'étape consistant à afficher une liste des différents changements possibles de relation, l'utilisateur manipulant un périphérique d'entrée pour sélectionner les dits différents changements possibles.

5. Procédé selon la revendication 4, dans lequel ladite étape consistant à afficher une liste des différents changements possibles de relation suit ladite étape consistant à sélectionner, en réponse à une entrée par l'utilisateur, deux objets ou plus parmi au moins deux classes d'objets différentes.

6. Procédé selon l'une quelconque des revendications précédentes, dans lequel les groupes d'objets dans une classe d'objets suivent une disposition hiérarchique, chaque objet dans un groupe affiché incluant une pluralité d'objets d'un niveau hiérarchique inférieur.

7. Procédé selon la revendication 6, dans lequel les représentations visuelles des objets de niveau supérieur sont affichées sur une position plus centrale que celles correspondants aux objets de niveau inférieur.

8. Procédé selon la revendication 6 ou 7 comprenant, de plus, l'étape consistant à afficher, en réponse à une action de l'utilisateur en relation avec un premier objet, les objets dans le niveau inférieur à celui du dit premier objet.
